# EUROPÄISCHE PATENTSCHRIFT

(11) **EP 1 648 646 B1**
(45) Veröffentlichungstag und Bekanntmachung des Hinweises auf die Patenterteilung: **27.12.2006**
(21) Anmeldenummer: 04763120.5
(22) Anmeldetag: 08.07.2004
(51) Int. Cl.: B23K 7/00, B23Q 1/48, B23Q 1/01, B23K 5/08

(54) **VORRICHTUNG ZUM SCHNEIDEN ODER SCHWEISSEN VON ROHRFÖRMIGEN WERKSTÜCKEN ODER DERGLEICHEN**
DEVICE FOR CUTTING OR WELDING TUBULAR WORKPIECES OR THE LIKE
DISPOSITIF POUR COUPER OU SOUDER DES PIECES D'USINAGE TUBULAIRES OU ANALOGUE

(30) Priorität: 01.08.2003 DE 10336032
(43) Veröffentlichungstag der Anmeldung: 26.04.2006
(73) Patentinhaber: EISENMANN Maschinenbau GmbH & Co. KG, 71032 Böblingen (DE)
(72) Erfinder: WIRTH, Peter, 72184 Eutingen im Gäu (DE)
(74) Vertreter: Ostertag, Ulrich
(86) Internationale Anmeldenummer: PCT/EP2004/007455
(87) Internationale Veröffentlichungsnummer: WO 2005/014218

(56) Entgegenhaltungen:
- EP-A- 0 350 645
- DE-A- 10 027 509
- US-A- 3 936 714
- US-B1- 6 571 672

## Beschreibung

Die Erfindung betrifft eine Vorrichtung zum Schneiden oder Schweißen von rohrfömigen Werkstücken od. dgl. mit
a) einem Schneid- oder Schweißbrenner;
b) einer Führungseinrichtung für den Schneid- oder Schweißbrenner, die so steuerbar ist, daß der Schneid- oder Schweißbrenner einer vorgegebenen Linie folgt,
wie sie, z.B., aus der EP-0 350 645-A bekannt ist.

In modernen Lackieranlagen, wie sie insbesondere zur Lackierung von Fahrzeugkarosserien verwendet werden, aber auch in anderen industriellen Anlagen finden sich häufig große Rohrleitungssysteme, die zur Förderung unterschiedlicher Medien, z. B. von Luft oder Flüssigkeiten, verwendet werden. Derartige Rohrleitungssysteme können mehrere hundert Meter Rohre umfassen und enthalten viele Stellen, an denen ein Rohr in das andere einmündet oder von diesem abzweigt oder ein Rohr unter einem Winkel an das andere Rohr angesetzt ist. Dabei können die Hüllkreis-durchmesser, die Querschnittsformen und die Wandstärken der miteinander verbunden Rohrabschnitte sehr unterschiedlich sein. Geläufige Hüllkreis-Durchmesser liegen zwischen 30 mm und 600 mm, die Querschnittsform kann insbesondere rund oder rechteckig sein, die Wandstärke liegt im allgemeinen zwischen einem und zehn Millimetern.

In eines der beiden miteinander zu verbindenden Rohre muß ein entsprechender Ausschnitt eingebracht werden, in welchen das abzweigende oder einmündende Rohr eingepasst wird; das abzweigende oder einmündende Rohr muß hierzu an seinem Ende komplementär beschnitten werden. Die Genauigkeitsanforderungen dabei sind außerordentlich hoch. Es werden Schnittgenauigkeiten angestrebt, die wesentlich kleiner als 0,5 mm, u. U. auch kleiner als 0,2 mm sind.

Derzeit sind auf dem Markt keine Rohrschneidvorrichtungen verfügbar, mit denen alle oben genannten Anforderungen bei verhältnismäßig niedrigen Kosten zur Zufriedenheit erfüllt werden können. Grundsätzlich ist es zwar möglich, Rohre mit Knickarm-Robotern zu schneiden. Diese sind aber an die Geometrie der Rohre nicht optimal angepaßt, verhältnismäßig teuer, nicht ohne weiteres auf eine Baustelle verbringbar und erreichen im allgemeinen auch die gewünschte Schnittgenauigkeit nicht.

Andere, kommerziell erhältliche und speziell zum Schneiden von Rohren gedachte Laser-Schneidvorrichtungen eignen sich nur zur Bearbeitung von verhältnismäßig dünnwandigen Rohren, da der Schnitt stets senkrecht zur Oberfläche der Rohre erfolgt. Bei dickwandigeren Rohren führt dies zu einer Aufklaffung der Schnittflächen der zusammenzufügenden Rohrteile, was beim Verschweißen zu Problemen führen kann.

Ähnlich Probleme ergeben sich bei Vorrichtungen, mit welchen die verschiedenen vorgeschnittenen Rohre oder Rohrteile zu dem Rohrsystem verschweißt werden, da hier der Schweißbrenner in ähnlicher Weise wie der Schneidbrenner beim Schneiden geführt werden muß.

Aufgabe der vorliegenden Erfindung ist es, eine Vorrichtung der eingangs genannten Art so auszugestalten, daß mit ihr rohrförmige Werkstücke od. dgl. unterschiedlichster Hüllkreis-Durchmesser, unterschiedlichster Querschnittsformen und unterschiedlichster Wandstärken geschnitten oder geschweißt werden können.

Diese Aufgabe wird erfindungsgemäß dadurch gelöst, daß die Führungseinrichtung umfaßt:
c) ein ständerartiges Portal, das seinerseits aufweist:
   ca) eine Durchgangsöffnung, in welche ein Werkstück in axialer Richtung einführbar ist;
   cb) ein Drehteil, welches motorisch angetrieben um die Achse der Durchgangsöffnung drehbar ist;
   cc) einen Haltearm, der an seinem freien Ende den Schneid- oder Schweißbrenner trägt, mit seinem anderen Ende an dem Drehteil so befestigt und der so ausgestaltet ist, daß der Schneid- oder Schweißbrenner radial zur Achse der Durchgangsöffnung des Portales verstellt und in unterschiedliche Winkellagen gegenüber der Oberfläche des Werkstückes gebracht werden kann;
d) eine Einrichtung, mit welcher eine Relativbewegung zwischen Werkstück und Schneid- oder Schweißbrenner in Achsrichtung der Durchgangsöffnung herbeigeführt werden kann.

Durch die Verwendung des ständerartigen Portals mit seiner Durchgangsöffnung, in welche das zu bearbeitende Werkstück eingebracht werden kann, und durch den um die Durchgangsöffnung verdrehbaren, den Schneid- oder Schweißbrenner tragenden Haltearm ist die erfindungsgemäße Vorrichtung an die "Grundgeometrie" von Rohren oder ähnlichen Werkstücken gut angepaßt: Durch die Verdrehung des Haltearmes mittels des Drehteiles um die Achse der Durchgangsöffnung können alle Umfangsbereiche des Werkstückes gut erreicht werden. Durch die Zustellmöglichkeit des Schneid- oder Schweißbrenners in radialer Richtung kann der zur Bearbeitung erforderliche Abstand zu der Oberfläche des Werkstückes in allen Winkelstellungen um die Achse der Durchgangsöffnung herum eingestellt werden. Durch die Kombination einer linearen Relativbewegung zwischen Werkstück und Schneid- und Schweißbrenner sowie der Drehbewegung des Schneid- und Schweißbrenners um die Achse der Durchgangsöffnung herum lassen sich beliebige Bearbeitungslinien an der Oberfläche des Werkstückes erzielen. Aufgrund der Eigenschaft des Haltearmes, in unterschiedliche Winkellagen gegenüber der Oberfläche des Werkstückes gebracht werden zu können, braucht die Richtung der Bearbeitung nicht senkrecht zur Oberfläche des Werkstückes zu verlaufen. Es können beispielsweise Schnitte durchgeführt werden, bei denen entlang der vollständigen Schnittlinie die Schnittrichtung in einem raumfesten Koordinatensystem immer dieselbe bleibt. Dies erleichtert die Einpassung eines in die entstandene Ausnehmung einzusetzenden und entsprechend beschnittenen zweiten Werkstückes.

Die Einpassung kann beispielsweise so erfolgen, daß die Schnittrichtung den Winkel, unter dem die beiden Werkstücke zusammengefügt werden sollen, halbiert. Alternativ ist es auch möglich, die Schnitte so zu führen, daß bei zusammengefügten Werkstücken eine V-Nut entsteht, die leicht zu verschweißen ist.

Vorzugsweise ist das um die Durchgangsöffnung des Portals verdrehbare Drehteil ein Ring oder ein Ringsegment, der bzw. das in einer Führung gelagert ist, die an einer Stirnfläche des Portals angeordnet ist.

Der Haltearm kann beispielsweise drei Glieder umfassen, von denen das erste sich im wesentlichen radial erstreckt und in dieser Richtung motorisch verschiebbar gehaltert ist, von denen das zweite Glied an dem ersten Glied um eine Achse motorisch verdrehbar befestigt ist, die bezogen auf die Durchgangsöffnung des Portals in azimutaler Richtung verläuft, und von denen das dritte Glied an dem zweiten Glied um eine Achse motorisch verdrehbar befestigt ist, die parallel zur Achse der Durchgangsöffnung verläuft. Die Verstellbarkeit des ersten Gliedes besorgt dabei die radiale Zustellung des Schneid- oder Schweißbrenners, während die beiden weiteren Glieder im Wesentlichen die Veränderung der Orientierung Schneid- oder Schweißbrenners gegenüber der Oberfläche des Werkstückes gestatten.

Die Einrichtung zur Erzeugung der Relativbewegung parallel zur Achse der Durchgangsöffnung kann so ausgebildet sein, daß sie das Wrkstück in Richtung der Achse der Durchgangsöffnung des Portals verstellen kann. Diese Ausgestaltung vereinfacht zwar die Bauweise des Portales, bringt aber mit sich, daß das Werkstück, welches verhältnismäßig schwer sein kann, bewegt werden muß.

Eine Einrichtung, mit welcher das Werkstück in Achsrichtung gegenüber dem Portal bewegt werden kann, umfaßt beispielsweise einen Mitnahmeschlitten, der parallel zur Achse der Durchgangsöffnung verfahrbar ist und in Mitnahmeverbindung mit dem Werkstück gebracht werden kann.

Alternativ kann die Einrichtung, mit welcher die Erzeugung der Relativbewegung zwischen Werkstück und Schneid- oder Schweißbrenner herbeigeführt wird, auch so ausgebildet sein, daß sie den Schweiß- oder Schneidbrenner in Richtung der Achse der Durchgangsöffnung des Portals verstellen kann. Dies bedeutet zwar eine etwas kompliziertere Bauweise des Portales selbst; da aber bei ihr nicht das schwere zu bearbeitende Werkstück sondern nur der leichtere Schweiß- oder Schneidbrenner zu bewegen ist, ist der apparative Aufwand gleichwohl vertretbar, zumal bei dieser Ausgestaltung die Erzielung der hohen Schnittgenauigkeit leichter möglich ist.

Ein bevorzugtes Beispiel dafür, wie der Schneid- oder Schweißbrenner parallel zur Achse der Durchgangsöffnung verstellt werden kann, ist dasjenige, bei welchem die fragliche Einrichtung von dem Haltearm selbst gebildet ist, der hierzu aus fünf miteinandr verbundenen Gliedern besteht, wobei
a) das erste Glied an dem Drehteil befestigt ist;
b) das zweite Glied an dem ersten Glied um eine Achse motorisch verdrehbar befestigt ist, die bezogen auf die Durchgangsöffnung des Portales in azimutaler Richtung verläuft;
c) das dritte Glied am zweiten Glied um eine Achse motorisch verdrehbar befestigt ist, die ebenfalls bezogen auf die Durchgangsöffnung des Portals in azimutaler Richtung verläuft;
d) das vierte Glied an dem dritten Glied um die Achse des dritten Gliedes motorisch verdrehbar befestigt ist;
e) das den Schneid- oder Schweißbrenner tragende fünfte Glied an dem vierten Glied um eine Achse verdrehbar ist, die senkrecht zur Achse des vierten Gliedes verläuft.

Die ersten drei Glieder dieses Haltearmes ermöglichen im Wesentlichen die radiale und die achsparallele Verstellung des Schneid- oder Schweißbrenners, während das vierte und fünfte Glied im Wesentlichen der Herbeiführung unterschiedlicher Winkellagen des Schneid- oder Schweißbrenners gegenüber der Oberfläche des Werkstückes dienen.

Verwendet man einen Haltearm entsprechend Anspruch 3, so kann die Einrichtung zur Erzeugung der Relativbewegung auch einen parallel zur Achse der Durchgangsöffnung motorisch beweglichen Schlitten umfassen, der an dem Drehteil befestigt ist und an dem der Haltearm angebracht ist. Hier wird also die Relativbewegung zwischen Werkstück und Schneid- oder Schweißbrenner durch eine Axialbewegung des den Haltearm und damit den Schneid- und Schweißbrenner haltenden Schlittens herbeigeführt.

Die erfindungsgemäße Vorrichtung umfaßt zweckmäßigerweise mehrere rollentragende Ständer auf mindestens einer Seite des Portals, auf welche das Werkstück auflegbar ist.

In der Durchgangsöffnung des Portals ist vorteilhafter Weise eine Führung für die Werkstücke vorgesehen. Auf diese Weise läßt sich das Werkstück in demjenigen Bereich, in dem es bearbeitet wird, besonders exakt positionieren.

Die Führung kann dabei mehrere an die Oberfläche des Werkstückes anlegbare Führungsrollen umfassen.

Wenn diese Führungsrollen motorisch antreibbar sind, können sie gleichzeitig als diejenige Einrichtung eingesetzt werden, welche das Werkstück in der erforderlichen Weise parallel zur Achse der Durchgangsöffnung des Portales translatorisch bewegt.

Die Einstellung der richtigen Ausgangslage des Werkstückes zu dem die Drehbewegung des Schneid- oder Schweißbrenners bewirkenden Drehring läßt sich dadurch erleichtern, daß die Position der Durchgangsöffung des Portals und damit diejenige des Drehringes in vertikaler und/oder horizontaler Richtung einstellbar ist.

Ausführungsbeispiele der Erfindung werden nachfolgend anhand der Zeichnung näher erläutert; es zeigen
- Figur 1: perspektivisch eine Gesamtübersicht über eine erste Vorrichtung zum Schneiden von Rohren;
- Figur 2: in vergrößertem Maßstabe, ebenfalls perspektivisch, die Schneidstation der Vorrichtung von Figur 1, jedoch in entgegengesetzter Richtung gesehen;
- Figur 3: die Stirnansicht der Schneidstation von Figur 1;
- Figur 4: perspektivisch ein zweites Ausführungsbeispiel einer Schneidstation beim Schneiden eines kreisrunden Rohres;
- Figur 5: die Seitenansicht der Schneidstation von Figur 4;
- Figur 6: die Draufsicht auf die Schneidstation von Figur 4;
- Figur 7: eine Stirnansicht der Schneidstation der Figur 4, in Bewegungsrichtung der Rohre gesehen;
- Figur 8: perspektivisch die Schneidstation der Figur 4, jedoch bei der Bearbeitung eines quadratischen Rohres.

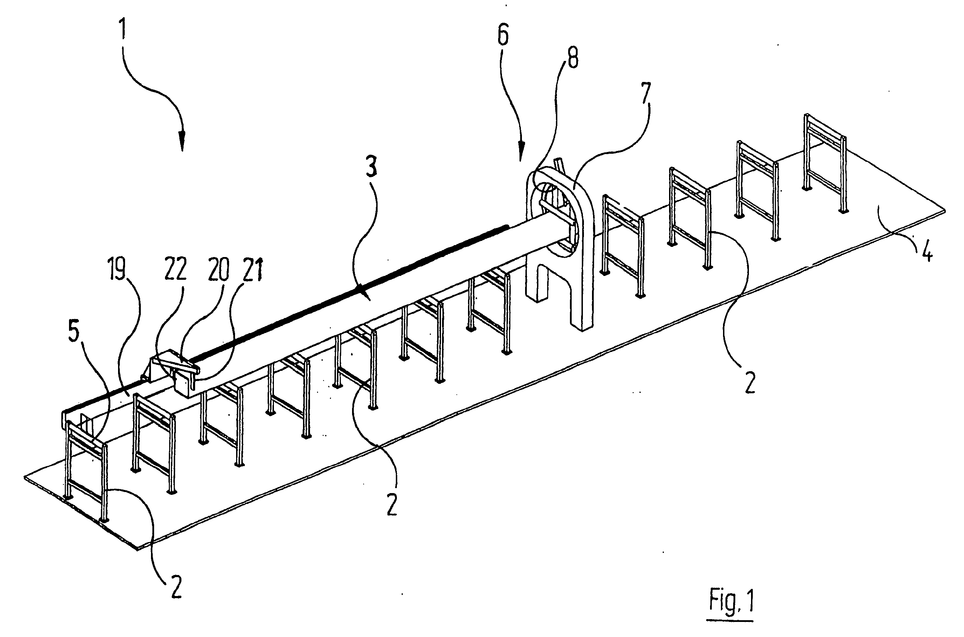

Zunächst wird auf die Figuren 1 bis 3 Bezug genommen, in denen eine erste, insgesamt mit dem Bezugszeichen 1 gekennzeichnete Vorrichtung zum Schneiden von Rohren 3 dargestellt ist. Die Vorrichtung 1 umfaßt eine Vielzahl von Ständern 2, die in Abstand voneinander in Richtung der Längsachse des zu bearbeitenden Rohres 3 auf dem Raumboden 4 befestigt sind. Jeder Ständer 2 trägt oben eine Rolle 5, die um eine senkrecht zur Längsache des Rohres 3 verlaufende Achse frei oder motorisch angetrieben verdrehbar ist. Das Rohr 3 wird, mit seiner Unterseite auf mehreren Rollen 5 mehrerer Ständer 2 aufliegend, in weiter unten beschriebener Weise in Richtung seiner Längsachse translatorisch bewegt.

Die Reihe von Ständern 2 ist durch eine Schneidstation unterbrochen, die insgesamt das Bezugszeichen 6 trägt. Die Schneidstation 6 besitzt ein ebenfalls auf dem Raumboden 4 montiertes Portal 7 mit einer verhältnismäßig großen, kreisrunden Durchgangsöffnung 8, deren Achse parallel zur Längsachse des Rohres 3 und damit zu dessen Bewegungsrichtung ist. Im Einzelfalle kann die Achse der Durchgangsöffnung 8 koaxial zur Längsachse des Rohres 3 sein.

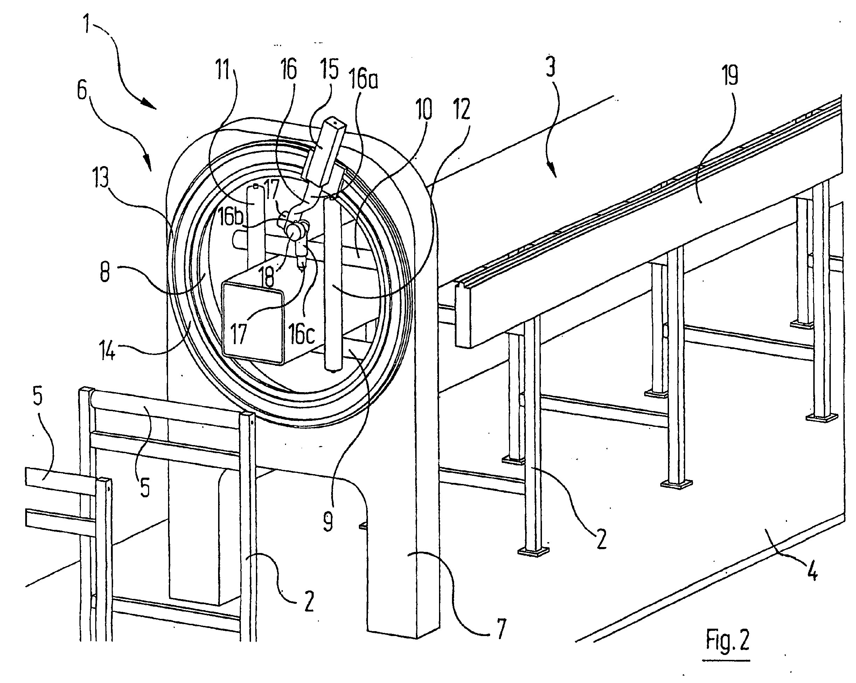

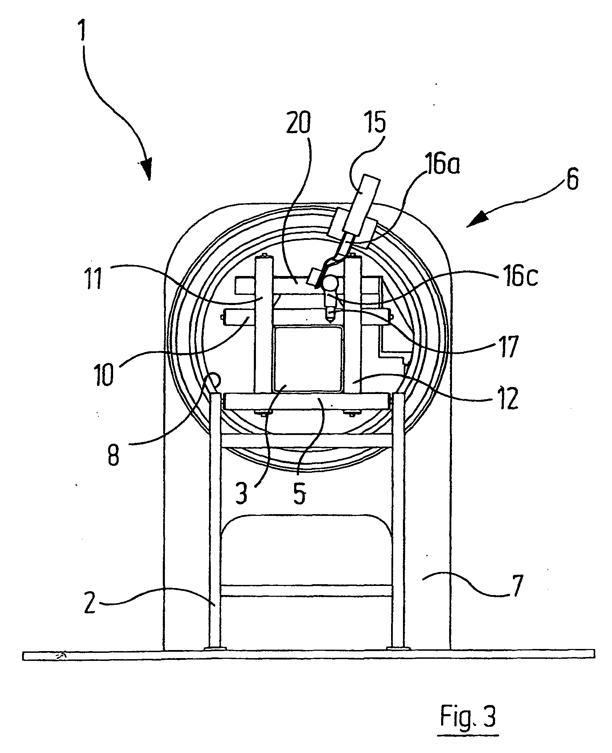

Wie insbesondere den Figuren 2 und 3 zu entnehmen ist, wird die Durchgangsöffnung 8 des Portales 7 sekantenartig von vier Führungsrollen 9, 10, 11, 12 durchsetzt. Zwei dieser Führungsrollen, nämlich die Führungsrollen 9 und 10, verlaufen horizontal und senkrecht zur Achse der Durchgangsöffnung 8, während die beiden anderen Führungsrollen, nämlich die Führungsrollen 11 und 12, vertikal ausgerichtet sind. Die Höhenposition der unteren horizontalen Führungsrolle 9 stimmt mit der Höhe der Rollen 5 auf den Ständern 2 überein. Das Rohr 3 liegt somit bei der Passage der Durchgangsöffnung 8 des Portals 7 auf dieser untersten horizontalen Führungsrolle 9 auf. Die Höhenposition der oberen horizontalen Führungsrolle 10 ist veränderbar, so daß sie sich, je nach den Abmessungen des Rohres 3, auf dessen Oberseite auflegen läßt. In ähnlicher Weise ist der Abstand der beiden vertikalen Führungsrollen 11, 12 so zur vertikalen Mittelebene der Durchgangsöffnung 8 symmetrisch verstellbar, daß sich die beiden Führungsrollen 11, 12 an die gegenüberliegenden Seitenflächen des Rohres 3 anlegen lassen.

Die Lager für die verschiedenen Führungsrollen 8 bis 12 sowie die Mittel, mit denen sich der Abstand zwischen den Paaren paralleler Führungsrollen 9, 10 und 11, 12 verändern läßt, sind in der Zeichnung zu deren Entlastung nicht dargestellt.

An der in Figur 1 dem Betrachter abgewandten, in Figur 2 dem Betrachter zugewandten Stirnseite des Portales 7 ist eine Ringführung 13 montiert, welche die Durchgangsöffnung 8 koaxial umgibt. Diese Ringführung 13 lagert einen Drehring 14, der mittels eines nicht dargestellten Motors um seine Achse und damit auch die Achse der Ringführung 13 und der Durchgangsöffnung 8 verdreht werden kann. An den Drehring 14 ist eine Halterung 15 für einen mehrgliedrigen, einen Schneidbrenner 17 tragenden Haltearm 16 befestigt. Ein erstes Glied 16a des Haltearmes 16 ragt aus der Halterung 15 in radialer Richtung vor und ist durch einen in der Halterung 15 untergebrachten Motor in dieser Richtung linear verstellbar. Am radial innen liegenden Ende des Gliedes 16a ist, senkrecht hierzu und senkrecht zur Achse der Durchgangsöffnung 8 und damit in Bezug auf die Durchgangsöffnung 8 in azimutaler Richtung verlaufend, ein zweites Glied 16b des Haltearmes 16 gelagert, welches mit Hilfe eines Motors 17 um seine Längsachse verdreht werden kann. Am gegenüberliegenden Ende des zweiten Gliedes 16b ist ein drittes Glied 16c angebracht, welches mit Hilfe eines weiteren Motors 18 um eine parallel zur Achse der Durchgangsöffnung 8 verlaufende Drehachse verdrehbar ist. Am Ende des dritten Gliedes 16c des Haltearmes 16 befindet sich der oben schon erwähnte Schneidbrenner 17.

Entlang derjenigen Ständer 2 der Vorrichtung 1, die in Bewegungsrichtung des Rohres 3 vor der Schneidstation 6 angeordnet sind, erstreckt sich, parallel zur Bewegungsrichtung des Rohres 3 eine Führungsschiene 19. An dieser Führungsschiene 19 ist ein Mitnahmeschlitten 20 motorisch verfahrbar, der zwei vertikale, in veränderbarem Abstand zueinander verlaufende Klemmbacken 21, 22 besitzt (vgl. Figur 1).

Die oben beschriebene Vorrichtung 1 arbeitet wie folgt;

Zunächst wird die Geometrie der Schnitte festgelegt, die in das Rohr 3 eingebracht werden sollen, einschließlich der Winkel, unter denen diese Schnitte gegenüber der Oberfläche des Rohres 3 zu erfolgen haben. Sodann wird das zu schneidende Rohr 3 auf die Rollen 5 derjenigen Ständer 2 aufgelegt, die in Bewegungsrichtung vor der Schneidstaton 6 liegen. Das Rohr 3 wird mit seinem vorderen Endbereich in die Durchgangsöffnung 8 der Schneidstation 6 und dort zwischen die jeweils parallel verlaufenden Rollenpaare 9, 10 und 11, 12 eingeführt. Diese wurden zuvor auf den hierfür geeigneten Abstand gebracht. Am nachlaufenden Endbereich des Rohres 3 werden die Klemmbacken 21, 22 des Mitnahmeschlittens 20 festgelegt. Nunmehr kann der Schneidprozeß nach den vorher festgelegten Daten erfolgen. Hierzu wird zunächst durch eine Translationsbewegung des Rohres 3 mit Hilfe des Mitnahmeschlittens 20, durch Verdrehung des Drehringes 14 gegenüber der Ringführung 13, durch radiales Verstellen des Gliedes 16a des Haltearmes 16 und durch entsprechendes Verschwenken der Glieder 16b und 16c der Schneidbrenner 17 in diejenige Position gebracht, in welcher der Schnitt beginnen soll und dabei in die richtige Richtung geneigt, so daß der Schnitt unter dem gewünschten Winkel gegenüber der Oberfläche erfolgt.

Sodann wird der Schneidbrenner 17 in Betrieb genommen und der Schnitt beginnt. Unter einer Überlagerung der linearen Translationsbewegung des Rohres 3, der Drehbewegung des Drehringes 14, der linearen Zustellbewegung des ersten Gliedes 16a des Haltearmes 16 wird nunmehr der Schnitt entlang der gewünschten Kontur geführt. Dabei wird durch entsprechendes Verdrehen der Glieder 16b und 16c des Haltearmes 16 ständig der gewünschte Winkel zwischen Schnitt und Oberfläche des Rohres 3 eingestellt bzw. beibehalten. Während des Durchganges des Rohres 3 durch die Schneidstation 6 können bei Bedarf mehrere Schnitte auf diese Weise erfolgen.

Bei einem in der Zeichnung nicht dargestellten Ausführungsbeispiel sind die Führungsrollen 9 bis 12 oder zumindest eine von ihnen motorisch angetrieben und sorgen so für den linearen Vorschub des Rohres 3. In diesem Falle kann der Mitnahmeschlitten 20 entfallen.

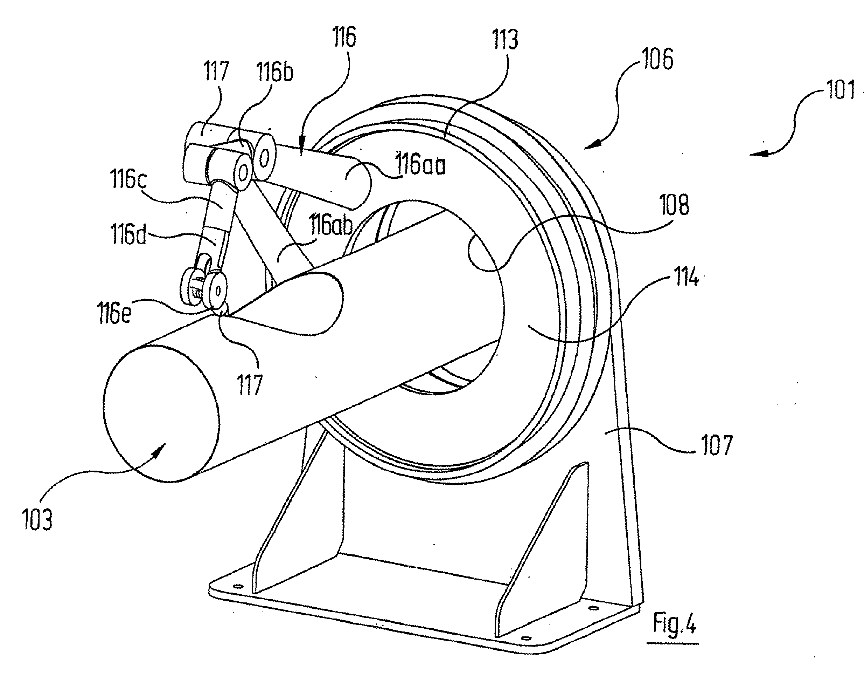

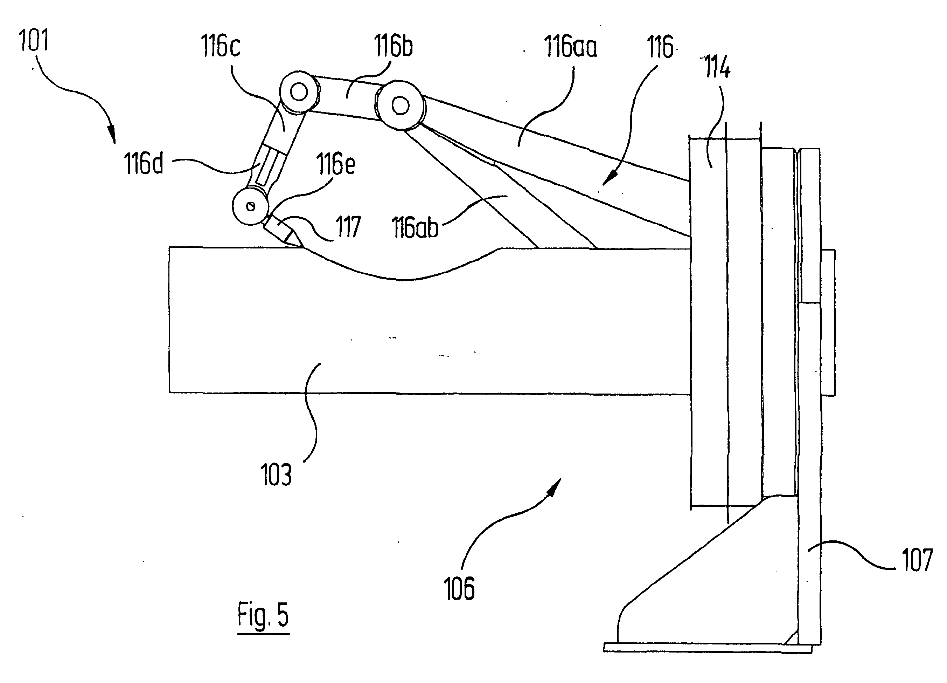

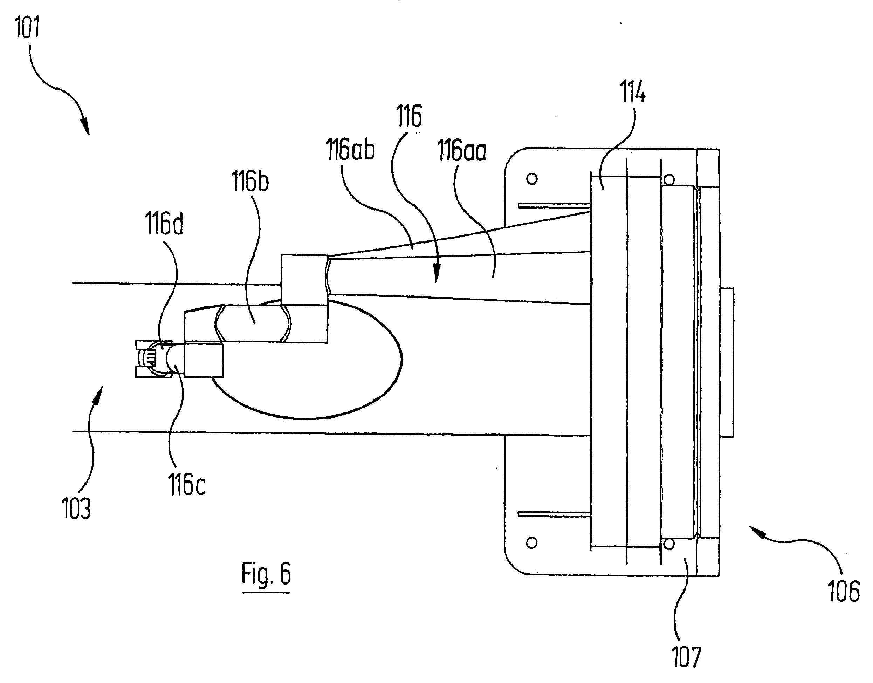

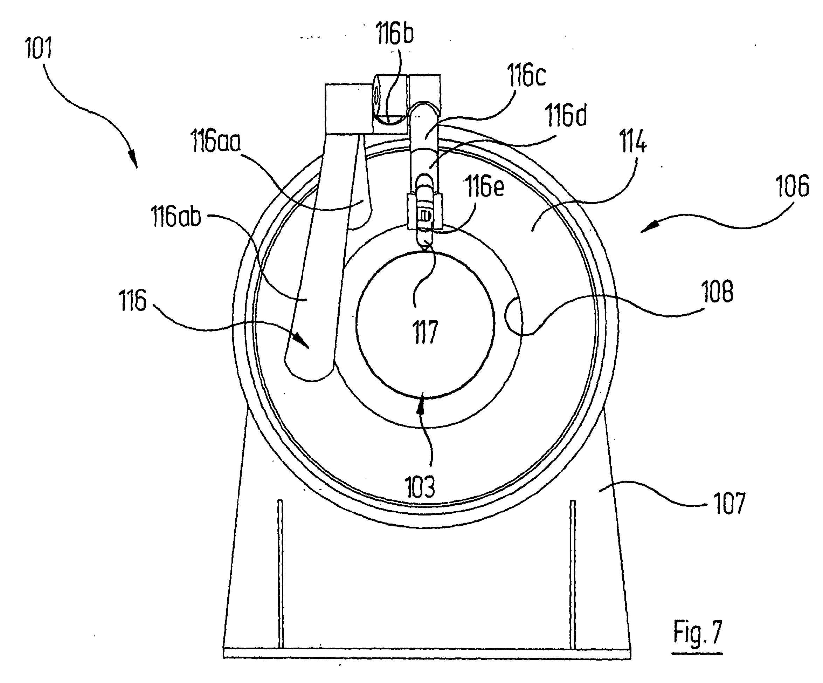

Das in den Figuren 4 bis 8 dargestellte zweite Ausführungsbeispiel einer Vorrichtung zum Schneiden von Rohrern weist erhebliche Ähnlichkeit mit dem ersten Ausführungsbeispiel auf. Entsprechende Teile sind daher mit demselben Bezugszeichen zuzüglich 100 gekennzeichnet.

Die Vorrichtung 101 der Figuren 4 bis 8 weist ebenso wie das zuerst beschriebene Ausführungsbeispiel eine Vielzahl von Ständern mit obenliegenden Rollen auf, auf denen das zu schneidende Rohr 103 vor und nach der Schneidstation 106 in Richtung seiner Längsachse bewegt werden kann. Die Ständer sind für das zweite Ausführungsbeispiel nicht dargestellt. Anders als das Ausführungsbeispiel der Figuren 1 bis 3 braucht dasjenige der Figuren 4 bis 8 nicht notwendigerweise einen Mitnahmeschlitten für das Rohr 103 oder angetriebene Führungsrollen in der Schneidstation 106 aufzuweisen, da das Rohr 1.03 während des Schneidvorganges stillsteht. Die Bewegung des Rohres 103 vor und nach dem Schneiden kann ggfs. auch von Hand oder durch die motorisch angetriebenen Rollen der Ständer erfolgen.

Die Schneidstation 106 des zweiten Ausführungsbeispiels der Schneidvorrichtung 110 umfaßt wie diejenige des ersten Ausführungsbeispieles ein Portal 107, das mit einer verhältnismäßig großflächigen, kreisrunden Durchgangsöffnung 108 versehen ist. An einer Stirnseite des Portales 107 ist die Durchgangsöffnung 108 koaxial von einem in einer Drehführung 113 motorisch verdrehbaren Drehring 114 umgeben. An dem Drehring 114 ist direkt, also ohne die Halterung 15 des ersten Ausführungsbeispieles, ein mehrgliedriger Haltearm 116 für den Schneidbrenner 117 starr befestigt. Das unmittelbar an dem Drehring 114 festgelegte Glied 116a ist aus Stabilitätsgründen als Doppelglied ausgestaltet und umfaßt die beiden Teilglieder 116aa und 116ab, die jeweils an einem Ende mit dem Drehring 114 verbunden sind und von dort V-förmig ausgehend am anderen Ende zusammenlaufen.

An den sich vereinigenden äußeren Enden der beiden Teilglieder 116aa und 116ab ist ein zweites Glied 116b des Haltearmes 116 befestigt, welches mit Hilfe eines Motors 117 um eine senkrecht zur Bewegungsrichtung des Rohres 103 verlaufende Achse verdreht werden kann. Am Ende des zweiten Gliedes 116b des Haltearmes 116 befindet sich, mit Hilfe eines Motors 118 um eine weitere, senkrecht zur Bewegungsrichtung des Rohres 103 verlaufende Achse verdrehbar, ein drittes Glied 116c des Haltearmes 116. Dieses dritte Glied 116c ist mit einem vierten Glied 116d derart verbunden, daß die Achsen der Glieder 116c und 116d miteinander fluchten und das vierte Glied 116d mittels eines nicht erkennbaren Motors um diese Achse verdreht werden kann. Am Ende des vierten Gliedes 116d wiederum ist ein fünftes, den Schneidbrenner 117 tragendes Glieg 116e so angebracht, daß es um eine senkrecht zur Achse des Glieds 116d verlaufende Achse mit Hilfe eines Motors verdreht werden kann. Die Position der zuletzt genannten Achse im Raum hängt also von der Drehstellung des vierten Gliedes 116d gegenüber dem dritten Glied 116c des Haltearmes 116 ab.

Die Funktionsweise der Vorrichtung 110 stimmt weitgehend mit derjenigen der Vorrichtung 1 aus den Figuren 1 bis 4 überein. Der Hauptunterschied besteht darin, daß beim ersten Ausführungsbeispiel die notwendige axiale Relativbewegung zwischen Schneidbrenner 17 und Rohr 3 durch eine lineare Translationsbewegung des Rohres 103 bewirkt wird, während beim zweiten Ausführungsbeispiel das Rohr 103 während des Schneidens stillsteht und auch die parallel zur Achse des Rohres 103 erforderliche Komponente der Bewegung des Schneidbrenners 117 mit Hilfe des Haltearmes 116 bewerkstelligt wird.

Der Ablauf der Vorgänge ist also durchaus ähnlich, wie dies oben für die Vorrichtung 1 beschrieben wurde:

Zunächst wird das zu schneidende Rohr 103, auf den Rollen der in der Zeichnung nicht dargestellten Ständer aufliegend, in die Durchgangsöffnung 108 der Schneidstation 106 eingeführt. Sodann wird die korrekte Relativlage zwischen dem Rohr 103 und der Durchgangsöffnung 108 der Schneidstation 106 hergestellt, was sowohl durch Manipulation am Rohr 103, beispielsweise mit Hilfe der nicht dargestellten Ständer, als auch durch Manipulation an der Schneidstation 106 selbst erfolgen kann. Hierzu kann die Schneidstation 106 insgesamt oder teilweise vertikal und/oder horizontal verstellbar sein. Eine Fehllage des Rohres 103 gegenüber der Durchgangsöffnung 108 braucht nicht in jedem Falle korrigiert zu werden. Sofern sie durch geeignete Sensoren hinreichend genau erfaßt ist, kann diese Fehllage auch rechnerisch berücksichtigt werden.

Nunmehr wird mit Hilfe des Drehringes 114 und der verschiedenen Glieder 116a bis 116d des Haltearmes 116 der Schneidbrenner 117 an den Beginn des Schnittes herangeführt und dabei der Schneidbrenner 117 so orientiert, daß der Schnitt unter dem gewünschten Winkel zur Oberfläche erfolgen kann. Durch eine Überlagerung der Drehbewegung des Drehringes 114 und der verschiedenen Schwenk- und Drehbewegungen der einzelnen Glieder 116a bis 116e und damit des Schneidbrenners 117 selbst wird nunmehr die gewünschte Schnittlinie abgefahren, wobei ständig die gewünschte Neigung des Schneidbrenners 117 gegenüber der Oberfläche aufrecht erhalten wird.

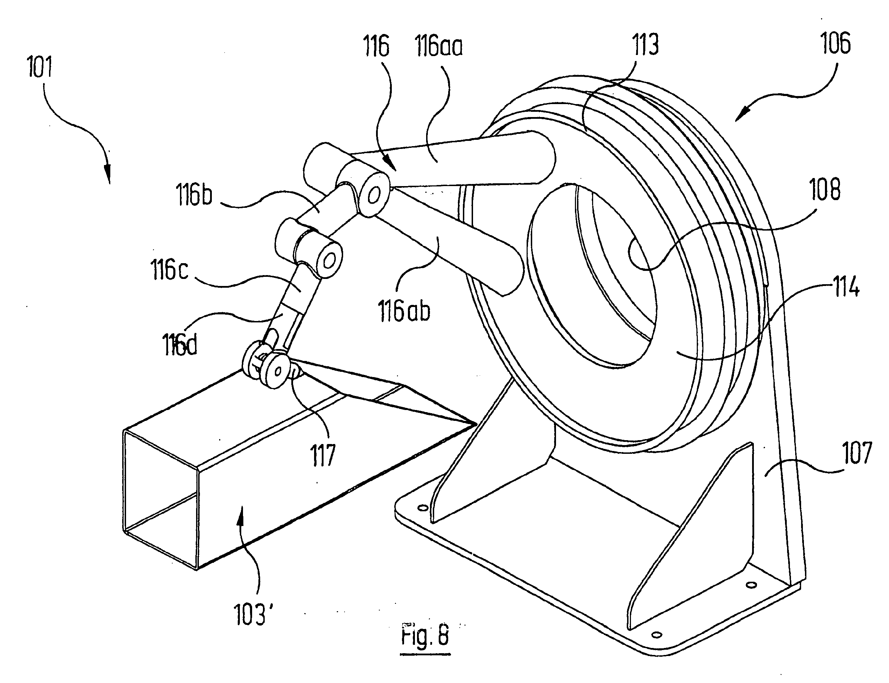

In den Figuren 4 bis 7 ist dargestellt, wie mit Hilfe der Vorrichtung 110 in ein im Querschnitt kreisrundes Rohr 103 ein Durchbruch eingeschnitten wird, in welchen ein zweites, abzweigendes oder einmündendes Rohr, welches entsprechend zugeschnitten ist, eingeschweißt werden kann. In Figur 8 ist dieselbe Vorrichtung 110 dargestellt, wie sie ein im Querschnitt quadratisches Rohr 103' unter einem bestimmten Winkel zur Längsachse ebenflächig abschneidet, so daß dieses Rohr 103' mit einem komplementär beschnittenen, sich unter einem entsprechenden Winkel wegerstreckenden weiteren Rohr verschweißt werden kann.

Die Vorrichtungen 1 und 101 wurden oben in ihrem Einsatz zum Schneiden von Rohren beschrieben. Sie können im wesentlichen unverändert auch als Schweißvorrichtungen eingesetzt werden, wobei selbstverständlich die Schneidbrenner 17 bzw. 117 durch entsprechende Schweißbrenner ersetzt werden müssen. Außerdem müssen Vorrichtungen vorgesehen sein, mit denen die beiden miteinander zu verbindenden Rohre in der richtigen Position aneinander gehalten werden können. Der Schweißbrenner fährt dann, unter einer entsprechenden Überlagerung der verschiedenen Bewegungen, welche durch die Vorrichtungen 1 und 101 ermöglicht werden, entlang der Stoßfuge der miteinander zu verbindenden Rohre und verbindet diese durch eine entsprechende Schweißung.

Die beschriebenen Vorrichtungen eignen sich nicht nur zum Schneiden und Schweißen von Rohren sondern auch für ähnliche Werkstücke, die eine ausgeprägte Längsachse aufweisen. Beispielsweise können mit ihnen an Stahlbau- oder Konstruktionsprofilen oder an Stangenmaterial Gehrungen, Formschlußverbindungen, Durchdringungen und Kehlschnitte zur Schweißnahtvorbereitung eingebracht werden.

## Patentansprüche

1. Vorrichtung zum Schneiden oder Schweißen von rohrförmigen Werstücken od. dgl. mit
a) einem Schneid- oder Schweißbrenner;
b) einer Führungseinrichtung für den Schneid- oder Schweißbrenner, die so steuerbar ist, daß der Schneid- oder Schweißbrenner einer vorgegebenen Linie folgt;
**dadurch gekennzeichnet, daß**
die Führungseinrichtung umfaßt:
c) ein ständerartiges Portal (7; 107), das seinerseits aufweist:
ca) eine Durchgangsöffnung (8; 108), in welche ein Werkstück (3; 103) in axialer Richtung einführbar ist;
cb) ein Drehteil (14; 114), welches motorisch angetrieben um die Achse der Durchgangsöffnung (8; 108) drehbar ist;
cc) einen Haltearm (16; 116), der an seinem freien Ende den Schneid- oder Schweißbrenner (17; 117) trägt und mit seinem anderen Ende an dem Drehteil (14; 114) so befestigt und der so ausgestaltet ist, daß der Schneid- oder Schweißbrenner (17; 117) radial zur Achse der Durchgangsöffnung (8; 108) des Portals (7; 107) verstellt und in unterschiedlichen Winkellagen gegenüber der Oberfläche des Werkstückes (3; 103) gebracht werden kann;
d) eine Einrichtung (20; 116), mit welcher eine Relativbewegung zwischen Werkstück (3; 103) und Schneid- oder Schweißbrenner (17; 117) in Achsrichtung der Durchgangsöffnung (8; 108) herbeigeführt werden kann.

2. Vorrichtung nach Anspruch 1, **dadurch gekennzeichnet, daß** das um die Durchgangsöffnung (8; 108) verdrehbare Drehteil (14; 114) ein Ring oder ein Ringsegment ist, das in einer Führung (13; 113) gelagert ist, die an einer Stirnfläche des Portals (7; 107) angeordnet ist.

3. Vorrichtung nach Anspruch 1 oder 2, **dadurch gekennzeichnet, daß** der Haltearm (16) drei Glieder (16a, 16b, 16c) umfaßt, von denen das erste (16a) sich im wesentlichen radial erstreckt und in dieser Richtung motorisch verschiebbar gehaltert ist, von denen das zweite Glied (16b) an dem ersten Glied (16a) um eine Achse motorisch verdrehbar befestigt ist, die bezogen auf die Durchgangsöffnung (8) des Portals (7) in azimutaler Richtung verläuft, und von denen das dritte Glied (16c) an dem zeiten Glied (16b) um eine Achse motorisch verdrehbar befestigt ist, die parallel zur Achse der Durchgangsöffnung (8) verläuft.

4. Vorrichtung nach einem der Ansprüche 1 bis 3, **dadurch gekennzeichnet, daß** die Einrichtung (20) zur Erzeugung der Relativbewegung so ausgebildet ist, daß sie das Werkstück (2) in Richtung der Achse der Durchgangsöffnung (8) des Portals (7) verstellen kann.

5. Vorrichtung nach Anspruch 4, **dadurch gekennzeichnet, daß** die Einrichtung (20) zur Erzeugung der Relativbewegung einen Mitnahmeschlitten (20) umfaßt, der parallel zur Achse der Durchgangsöffnung (8) verfahrbar ist und in Mitnahmeverbindung mit dem Werkstück (3) gebracht werden kann.

6. Vorrichtung nach einem der Ansprüche 1 bis 3, **dadurch gekennzeichnet, daß** die Einrichtung (116) zur Erzeugung der Relativbewegung so ausgebildet ist, daß sie den Schneid- oder Schweißbrenner (117) in Richtung der Achse der Durchgangsöffnung (108) des Portals (107) vestellen kann.

7. Vorrichtung nach Anspruch 6, **dadurch gekennzeichnet, daß** die Einrichtung zur Erzeugung der Relativbewegung von dem Haltearm (116) gebildet ist, der hierzu aus fünf miteinander verbundenen Gliedern (116a bis 116e) besteht, wobei
a) das erste Glied (116a) an dem Drehteil (114) befestigt ist;
b) das zweite Glied (116b) an dem ersten Glied (116a) um eine Achse motorisch verdrehbar befestigt ist, die bezogen auf die Durchgangsöffnung (108) des Portals (107) in azimutaler Richtung verläuft;
c) das dritte Glied (116c) an dem zweiten Glied (116b) um eine Achse motorisch verdrehbar befestigt ist, die ebenfalls bezogen auf die Durchgangsöffnung (108) des Portals (107) in azimutaler Richtung verläuft;
d) das vierte Glied (116d) an dem dritten Glied (116c) um die Achse des dritten Gliedes (116c) motorisch verdrehbar besfestigt ist;
e) das den Schneid- oder Schweißbrenner (117) tragende fünfte Glied (116e) an dem vierten Glied (116d) um eine Achse verdrehbar befestigt ist, die senkrecht zur Achse des vierten Glieds (116d) verläuft.

8. Vorrichtung nach Anspruch 6 bei Rückbeziehung auf Anspruch 3, **dadurch gekennzeichnet, daß** die Einrichtung zur Erzeugung der Relativbewegung einen parallel zur Achse der Durchgangsöffnung motorisch bewegbaren Schlitten umfaßt, der an dem Drehteil befestigt ist und an dem der Haltearm angebracht ist.

9. Vorrichtung nach einem der vorhergehenden Ansprüche, **dadurch gekennzeichnet, daß** sie mehrere Rollen (5) tragende Ständer (2) auf mindestens einer Seite des Portals (7) umfaßt, auf welchen das Werkstück (3) auflegbar ist.

10. Vorrichtung nach einem der vorhergehenden Ansprüche, **dadurch gekennzeichnet, daß** in der Durchgangsöffnung (8) des Portals (7) eine Führung (9 bis 12) für das Werkstück (3) vorgesehen ist.

11. Vorrichtung nach Anspruch 10, **dadurch gekennzeichnet, daß** die Führung mehrere an die Oberfläche des Werkstückes (3) anlegbare Führungsrollen (9 bis 12) umfaßt.

12. Vorrichtung nach Anspruch 11, **dadurch gekennzeichnet, daß** die Führungsrollen motorisch antreibbar sind.

13. Vorrichtung nach einem der vorhergehenden Ansprüche, **dadurch gekennzeichnet, daß** die Position der Durchgangsöffnung (8; 108) in vertikaler und/oder horizontaler Richtung einstellbar ist.

## Claims

1. Apparatus for cutting or welding tubular workpieces or the like, having
a) a cutting or welding torch;
b) a guiding device for the cutting or welding torch, which device is controllable in such a way that the cutting or welding torch follows a predetermined line;
**characterised in that**
the guiding device comprises:
c) a stand-like portal (7; 107), which for its part has:
ca) a through opening (8; 108), into which a workpiece (3; 103) can be guided in the axial direction;
cb) a rotary part (14; 114), which is rotatable about the axis of the through opening (8; 108) in a motor-driven manner;
cc) a holding arm (16; 116), which at its free end carries the cutting or welding torch (17; 117) and with its other end is fixed in such a way to the rotary part (14; 114) and configured in such a way that the cutting or welding torch (17; 117) can be adjusted radially in relation to the axis of the through opening (8; 108) of the portal (7; 107) and brought into different angular positions in relation to the surface of the workpiece (3; 103);
d) a device (20; 116), by which a relative movement between the workpiece (3; 103) and the cutting or welding torch (17; 117) in the axial direction of the through opening (8; 108) can be brought about.

2. Apparatus according to Claim 1, **characterised in that** the rotary part (14; 114) rotatable about the through opening (8; 108) is a ring or a ring segment which is mounted in a guide (13; 113) arranged on one end face of the portal (7; 107).

3. Apparatus according to Claim 1 or 2, **characterised in that** the holding arm (16) comprises three sections (16a, 16b, 16c), of which the first (16a) extends substantially radially and is mounted so as to be displaceable in this direction by motor, of which the second section (16b) is fixed to the first section (16a) so as to be rotatable by motor about an axis which runs in the azimuthal direction in relation to the through opening (8) of the portal (7), and of which the third section (16c) is fixed to the second section (16b) so as to be rotatable by motor about an axis which runs parallel to the axis of the through opening (8).

4. Apparatus according to one of Claims 1 to 3, **characterised in that** the device (20) for producing the relative movement is designed in such a way that it can adjust the workpiece (2) in the direction of the axis of the through opening (8) of the portal (7).

5. Apparatus according to Claim 4, **characterised in that** the device (20) for producing the relative movement comprises a carry-along slide (20), which is movable parallel to the axis of the through opening (8) and can be brought into carry-along connection with the workpiece (3).

6. Apparatus according to one of Claims 1 to 3, **characterised in that** the device (116) for producing the relative movement is designed in such a way that it can adjust the cutting or welding torch (117) in the direction of the axis of the through opening (108) of the portal (107).

7. Apparatus according to Claim 6, **characterised in that** the device for producing the relative movement is formed by the holding arm (116), which for this purpose comprises five interconnected sections (116a to 116e),
a) the first section (116a) being fixed to the rotary part (114);
b) the second section (116b) being fixed to the first section (116a) so as to be rotatable by motor about an axis which runs in the azimuthal direction in relation to the through opening (108) of the portal (107);
c) the third section (116c) being fixed to the second section (116b) so as to be rotatable by motor about an axis which likewise runs in the azimuthal direction in relation to the through opening (108) of the portal (107);
d) the fourth section (116d) being fixed to the third section (116c) so as to be rotatable by motor about the axis of the third section (116c);
e) the fifth section (116e), which carries the cutting or welding torch (117), being fixed to the fourth section (116d) so as to be rotatable about an axis which runs perpendicular to the axis of the fourth section (116d).

8. Apparatus according to Claim 6 when referring back to Claim 3, **characterised in that** the device for producing the relative movement comprises a slide which is movable by motor parallel to the axis of the through opening and is fixed to the rotary part and to which the holding arm is attached.

9. Apparatus according to one of the preceding claims, **characterised in that** it comprises, on at least one side of the portal (7), stands (2) which carry a plurality of rollers (5) and on which the workpiece (3) can be laid.

10. Apparatus according to one of the preceding claims, **characterised in that** a guide (9 to 12) is provided for the workpiece (3) in the through opening (8) of the portal (7).

11. Apparatus according to Claim 10, **characterised in that** the guide comprises a plurality of guide rollers (9 to 12) which can be laid against the surface of the workpiece (3).

12. Apparatus according to Claim 11, **characterised in that** the guide rollers can be driven by motor.

13. Apparatus according to one of the preceding claims, **characterised in that** the position of the through opening (8; 108) is adjustable in the vertical and/or horizontal direction.

## Revendications

1. Dispositif pour couper ou souder des pièces tubulaires ou analogues, avec
a) un chalumeau coupeur ou soudeur ;
b) un équipement de guidage pour le chalumeau coupeur ou soudeur, qui peut être commandé de telle sorte que le chalumeau coupeur ou soudeur suit une ligne prédéfinie ;
**caractérisé en ce que** l'équipement de guidage comprend :
c) un portique (7 ; 107) du genre montant, qui présente lui-même :
ca) une ouverture de passage (8 ; 108), dans laquelle une pièce (3 ; 103) peut être introduite en direction axiale ;
cb) un élément rotatif (14 ; 114), qui est rotatif autour de l'axe de l'ouverture de passage (8 ; 108) en étant entraîné par moteur ;
cc) un bras de maintien (16 ; 116), qui porte à son extrémité libre le chalumeau coupeur ou soudeur (17; 117) et est fixé par son autre extrémité sur l'élément rotatif (14 ; 114), et qui est conçu de telle sorte que le chalumeau coupeur ou soudeur (17; 117) peut être déplacé radialement à l'axe de l'ouverture de passage (8 ; 108) du portique (7 ; 107) et peut être amené dans différentes positions angulaires par rapport à la surface de la pièce (3 ; 103) ;
d) un équipement (20 ; 116) qui permet de produire un mouvement relatif entre la pièce (3 ; 103) et le chalumeau coupeur ou soudeur (17 ; 117) dans la direction axiale de l'ouverture de passage (8 ; 108).

2. Dispositif selon la revendication 1, **caractérisé en ce que** l'élément (14 ; 114) rotatif autour de l'ouverture de passage (8 ; 108) est une bague ou un segment de bague qui est monté dans un guide (13 ; 113) qui est disposé sur une face frontale du portique (7 ; 107).

3. Dispositif selon la revendication 1 ou 2, **caractérisé en ce que** le bras de maintien (16) comprend trois éléments (16a, 16b, 16c), dont le premier (16a) s'étend essentiellement radialement et est maintenu à déplacement par moteur dans cette direction, dont le deuxième (16b) est fixé sur le premier (16a) à rotation par moteur autour d'un axe qui s'étend en direction azimutale par rapport à l'ouverture de passage (8) du portique (7), et dont le troisième (16c) est fixé sur le deuxième (16b) à rotation par moteur autour d'un axe qui s'étend parallèlement à l'axe de l'ouverture de passage (8).

4. Dispositif selon l'une des revendications 1 à 3, **caractérisé en ce que** l'équipement (20) pour produire le mouvement relatif est conçu de telle sorte qu'il peut déplacer la pièce (3) dans la direction de l'axe de l'ouverture de passage (8) du portique (7).

5. Dispositif selon la revendication 4, **caractérisé en ce que** l'équipement (20) pour produire le mouvement relatif comprend un coulisseau entraîneur (20) qui peut être déplacé parallèlement à l'axe de l'ouverture de passage (8) et peut être amené en liaison d'entraînement avec la pièce (3).

6. Dispositif selon l'une des revendications 1 à 3, **caractérisé en ce que** l'équipement (116) pour produire le mouvement relatif est conçu de telle sorte qu'il peut déplacer le chalumeau coupeur ou soudeur (117) dans la direction de l'axe de l'ouverture de passage (108) du portique (107).

7. Dispositif selon la revendication 6, **caractérisé en ce que** l'équipement pour produire le mouvement relatif est formé par le bras de maintien (116) qui est constitué à cet effet de cinq éléments (116a à 116e) reliés entre eux, sachant que
a) le premier élément (116a) est fixé sur l'élément rotatif (114) ;
b) le deuxième élément (116b) est fixé sur le premier élément (116a) à rotation par moteur autour d'un axe qui s'étend en direction azimutale par rapport à l'ouverture de passage (108) du portique (107) ;
c) le troisième élément (116c) est fixé sur le deuxième élément (116b) à rotation par moteur autour d'un axe qui s'étend lui aussi en direction azimutale par rapport à l'ouverture de passage (108) du portique (107) ;
d) le quatrième élément (116d) est fixé sur le troisième élément (116c) à rotation par moteur autour de l'axe du troisième élément (116c) ;
e) le cinquième élément (116e), qui porte le chalumeau coupeur ou soudeur (117), est fixé sur le quatrième élément (116d) à rotation autour d'un axe qui s'étend perpendiculairement à l'axe du quatrième élément (116d).

8. Dispositif selon la revendication 6 en rattachement à la revendication 3, **caractérisé en ce que** l'équipement pour produire le mouvement relatif comprend un coulisseau pouvant être déplacé par moteur parallèlement à l'axe de l'ouverture de passage, coulisseau qui est fixé sur l'élément rotatif et sur lequel est installé le bras de maintien.

9. Dispositif selon l'une des revendications précédentes, **caractérisé en ce qu'**il comprend, sur au moins un côté du portique (7), plusieurs montants (2) portant des rouleaux (5) sur lesquels la pièce (3) peut être posée.

10. Dispositif selon l'une des revendications précédentes, **caractérisé en ce qu'**un guide (9 à 12) pour la pièce (3) est prévu dans l'ouverture de passage (8) du portique (7).

11. Dispositif selon la revendication 10, **caractérisé en ce que** le guide comprend plusieurs rouleaux de guidage (9 à 12) pouvant être appliqués contre la surface de la pièce (3).

12. Dispositif selon la revendication 11, **caractérisé en ce que** les rouleaux de guidage peuvent être entraînés par moteur.

13. Dispositif selon l'une des revendications précédentes, **caractérisé en ce que** la position de l'ouverture de passage (8 ; 108) est réglable en direction verticale et/ou horizontale.
